# EUROPÄISCHE PATENTANMELDUNG

(11) **EP 4 141 664 A1**
(43) Veröffentlichungstag der Anmeldung: **01.03.2023**
(21) Anmeldenummer: 21193712.3
(22) Anmeldetag: 30.08.2021
(51) Int. Cl.: G06F 9/455, G06F 9/50

(54) **RESSOURCENTEILUNG IN EINER ORCHESTRIERTEN UMGEBUNG**

(71) Anmelder: Siemens Aktiengesellschaft, 80333 München (DE)
(72) Erfinder: Feist, Christian Peter, 80689 München (DE); Knierim, Christian, 81373 München (DE)

(57) **Zusammenfassung**

Verfahren und Anordnung zur Ressourcenteilung in einer orchestrierten Umgebung umfassend einen ersten Cluster (10) und mindestens einen zweiten Cluster (20), bei dem jeder Cluster eine Orchestrierungseinheit (11, 21) zum automatischen Verwalten einer Containerinstanz auf mindestens einem Knoten (13, 14, 15, 23, 24, 25) der Cluster (10, 20) aufweist, die derart ausgebildet ist
- eine Anfrage zum Starten der Containerinstanz (C) umfassend eine Bereitstellungsrichtlinie (B) in einer ersten Orchestrierungseinheit (11) des ersten Clusters (10) zu empfangen,
- einen ersten Auslastungszustand von ersten Knoten (13, 14, 15) des ersten Clusters (10) zur Bereitstellung der Containerinstanz (C) durch die erste Orchestrierungseinheit (11) des ersten Clusters (10) zu ermitteln,
- einen zweiten Auslastungszustand von zweiten Knoten (23, 24, 25) des mindestens einen zweiten Clusters (20) durch einen Austausch von Lastinformation (L) zwischen der ersten Orchestrierungseinheit (11) und einer zweiten Orchestrierungseinheit (21) des mindestes einen zweiten Clusters (20) zu ermitteln,
- einen Zielknoten (23) aus einem der ersten (13, 14, 15) und zweiten Knoten (23, 24, 25) abhängig von der Bereitstellungsrichtlinie (B) und abhängig von dem ersten Auslastungszustand und dem zweiten Auslastungszustand durch die erste Orchestrierungseinheit (11) auszuwählen, und
- die Containerinstanz (C) durch die zweite Orchestrierungseinheit (21) auf dem Zielknoten (23) zu starten, wenn der ausgewählte Zielknoten (23) ein zweiter Knoten (23, 24, 25) ist.

## Beschreibung

Die Erfindung betrifft ein Verfahren zur Ressourcenteilung in einer orchestrierten Umgebung mit einem ersten Cluster und mindestens einem zweiten Cluster, bei dem jedes Cluster mindestens einen Knoten zum Ausführen mindestens einer Containerinstanz und eine Orchestrierungseinheit zum automatischen Verwalten der Containerinstanzen auf dem mindestens einen Knoten des Clusters aufweist.

Containervirtualisierung ist eine Methode, bei der mehrere Instanzen eines Betriebssystems isoliert voneinander einen Betriebssystemkern eines Gastrechners nutzen können. Software Container, im Weiteren kurz Container genannt, stellen somit eine leichtgewichtige Art der Virtualisierung einer Laufzeitumgebung auf einem Gastrechner, auch Hostsystem genannt, dar und kapseln eine in einem Container betriebene Applikation vom darunterliegenden Hostsystem ab. Applikationen werden mittlerweile in vielen Bereichen wie beispielsweise der Industrieautomation und der Prozesssteuerung, aber auch für Anwendungen in Transportsystemen oder Fahrzeugen mittels Container implementiert.

Um einen Container auf dem Hostsystem starten zu können, wird ein Containerabbild benötigt, welches neben der Applikationssoftware selbst auch die für die Applikationssoftware erforderlichen Binärprogramme und Bibliotheken enthält. Aus dem Containerabbild wird auf dem Hostsystem eine Containerinstanz erstellt und auf der Laufzeitumgebung ausgeführt. Bei Bedarf, beispielsweise bei einem verstärkten Aufruf der Applikation durch Nutzer, können aus dem gleichen Containerabbild weitere Containerinstanzen auf dem gleichen oder einem anderen Hostsystem erzeugt und ausgeführt werden.

Herkömmlicherweise werden Containerinstanzen mit Hilfe einer Laufzeitumgebung wie beispielsweise "Docker" auf dem Hostsystem, das gegebenenfalls auch als virtualisierte Hardware-Ressourcen ausgebildet ist, betrieben. Um Container-instanzen hochverfügbar bereitzustellen oder deren Last zu skalieren, werden Container mit Hilfe einer Orchestrierungslösung wie beispielsweise "Kubernetes" über mehrere organisatorisch oder geographisch verteilte Ressourcen verteilt. Hierzu verwaltet ein zentraler Orchestrierer mehrere Geräte, Maschinen oder andere Ressourcen, die allgemein als Knoten bezeichnet werden, und auf denen eine Orchestrierungs-Frontendkomponente, beispielsweise "Kubelet" betrieben wird und Befehle einer auf dem zentraler Orchestrierer angeordneten Orchestrierungs-Backendkomponente entgegennimmt und auf der Container-Laufzeitumgebung umsetzt.

In einem Cluster bestehend aus Orchestrierer und Knoten sind im Regelfall ungenutzte Hardware-Ressourcen verfügbar, welche vorgehalten werden, um ggf. Lastspitzen einer Applikation beispielsweise durch Hochskalierung von Containerinstanzen abfangen zu können. In den meisten Fällen werden auf diesen Clustern jedoch überzählige und ungenutzte Ressourcen vorgehalten, ohne dass diese tatsächlich angefragt werden. Durch die 1:1-Zuteilung von Knoten zu einem Orchestrierer ist es nicht möglich, dass andere Orchestrierer diese gegebenenfalls temporär verfügbaren Ressourcen eines anderen Clusters mitnutzen können.

Es ist somit eine Aufgabe der vorliegenden Erfindung, einerseits verfügbare Ressourcen über mehrere Orchestrierer hinweg verteilt und gleichzeitig nutzen zu können, und dabei sicherzustellen, dass die dem Orchestrierer direkt zugeordneten Ressourcen im Bedarfsfall für die eigentlichen Kernaufgaben zur Verfügung stehen.

Die Aufgabe wird durch die in den unabhängigen Ansprüchen beschriebenen Maßnahmen gelöst. In den Unteransprüchen sind vorteilhafte Weiterbildungen der Erfindung dargestellt. Gemäß einem ersten Aspekt betrifft die Erfindung ein Verfahren zur Ressourcenteilung in einer orchestrierten Umgebung mit einem ersten Cluster und mindestens einem zweiten Cluster, bei dem jeder Cluster mindestens einen Knoten zum Ausführen mindestens einer Containerinstanz und eine Orchestrierungseinheit zum automatischen Verwalten der Containerinstanzen auf dem mindestens einen Knoten des Clusters aufweist, umfassend
- Empfangen einer Anfrage zum Starten der Containerinstanz umfassend eine Bereitstellungsrichtlinie in einer ersten Orchestrierungseinheit des ersten Clusters,
- Ermitteln eines ersten Auslastungszustands der ersten Knoten des ersten Clusters zur Bereitstellung der Containerinstanz durch die erste Orchestrierungseinheit des ersten Clusters,
- Ermitteln eines zweiten Auslastungszustands der zweiten Knoten des mindestens einen zweiten Clusters durch einen Austausch von Lastinformation zwischen der ersten Orchestrierungseinheit und einer zweiten Orchestrierungseinheit des mindestes einen zweiten Clusters,
- Auswählen eines Zielknotens aus einem der ersten und zweiten Knoten abhängig von der Bereitstellungsrichtlinie und abhängig von dem ersten Auslastungszustand und dem zweiten Auslastungszustand durch die erste Orchestrierungseinheit, und
- Starten der Containerinstanz durch die zweite Orchestrierungseinheit auf dem Zielknoten, wenn der ausgewählte Zielknoten ein zweiter Knoten ist.

Durch die Bereitstellungsrichtlinie können die Eigenheiten und Anforderungen der zu startenden Containerinstanz im Verteilungsprozess berücksichtigt werden. Da die Bereitstellungsrichtlinie der Anfrage zum Starten der Containerinstanz zugeordnet ist, können für die Containerinstanz spezifische Bereitstellungsrichtlinie definiert und durchgesetzt werden. Durch den Austausch von Lastinformation zwischen der ersten Orchestrierungseinheit und mindestens einer anderen, zweiten Orchestrierungseinheit des mindestens einen zweiten Clusters ist eine effiziente und schnelle Kommunikation zwischen dem ersten und den zweiten Orchestrierungseinheiten zur Abstimmung der Lastverhältnisse möglich. Jede der Orchestrierungseinheiten kennt die Auslastung der durch die Orchestrierungseinheit verwalteten Knoten des Clusters oder kann diese mit bestehenden Abläufen ermitteln. Es ist keine zusätzliche, beispielsweise übergeordnete Koordinierungseinheit oder auch Orchestrierungseinheit erforderlich, um die Ressourcenverteilung zu steuern. Somit ist die Lösung auch effizient in Bezug auf Hardware-Einheiten zur Ermittlung des Auslastungszustands der beteiligten Cluster. Somit können über mehrere Orchestrierungseinheiten hinweg Ressourcen verwaltet werden und gleichzeitig die eigentlichen Kernaufgaben der jeweiligen auf dem Cluster betrieben Applikationen wahrgenommen werden.

Eine geteilte Nutzung der Knoten über mehrere Cluster ist im Besonderen von Vorteil, wenn beispielsweise innerhalb einer Produktionsstraße einer Fertigungsanlage oder anderen Internet der Dinge (IoT)-Umgebungen genügend Rechenkapazität verfügbar sind und einzelne Orchestrierungseinheiten sich die Ressourcen untereinander aufteilen und dynamisch anpassen können. Das Verfahren ermöglicht auch ein schnelles, stufenweises einer neuen IoT- bzw. Laufzeitumgebung, das mit einem kleinen eigenen Setup der Orchestrierungseinheiten eine Anlage schnell startet werden kann und nicht gewartet werden muss, bis sämtliche Knoten verfügbar sind. Der erste Cluster kann auch keinen Knoten enthalten, sodass die erste Orchestrierungseinheit die Containerinstanz ausschließlich auf einem zweiten Knoten startet. Sind keine Ressourcen auf zweiten Knoten vorhanden wird die Containerinstanz nicht ausgeführt.

In einer vorteilhaften Ausführungsform sind in der Bereitstellungsrichtlinie ein bestimmter Knoten oder ein Knotentyp und/oder Eigenschaften des Knotens vorgegeben, auf dem die Containerinstanz gestartet werden darf.

Dadurch kann sichergestellt werden, dass eine Containerinstanz, die eine Applikation ausführt, die beispielsweise auf einem bestimmten Gerät ablaufen muss, auch nur auf diesem bestimmten Gerät abläuft und somit nicht auf einem anderen ersten oder auf einem zweiten Knoten gestartet wird. Ist in der Bereitstellungsrichtlinie ein Gerätetyp angegeben, wird die Ausführung der Containerinstanz auf einen ersten oder zweiten Knoten, der dem angegebenen Gerätetyp entspricht, eingeschränkt.

In einer vorteilhaften Ausführungsform ist in der Bereitstellungsrichtlinie vorgegeben, ob die Containerinstanz lediglich auf einem der ersten Knoten oder auch auf einem der zweiten Knoten gestartet werden darf.

Dadurch kann das Starten einer beispielsweise sicherheitsrelevanten Applikation bzw. der entsprechenden Containerinstanz auf einen ersten Knoten beschränkt und damit Sicherheitsanforderungen an die Applikation erfüllt werden.

In einer vorteilhaften Ausführungsform wird eine Containerinstanz, deren Ausführung nicht auf einen bestimmten Knoten beschränkt ist, abhängig vom ersten und zweiten Auslastungszustand entweder auf einem der ersten oder auf einem der zweiten Knoten gestartet.

Somit können alle Containerinstanzen, deren Ausführung durch die Bereitstellungsrichtlinie nicht auf erste Knoten beschränkt sind auch auf Ressourcen im zweiten Cluster, d.h. zweite Knoten, ausgeführt werden. Dies ermöglicht es die Anzahl der auf verschiedene Cluster verteilbare Container-instanzen flexibel anzupassen und zu maximieren, sodass eine umfangreiche Verteilung auf die ersten Knoten und alle verfügbaren zweiten Knoten möglich ist.

In einer vorteilhaften Ausführungsform wird innerhalb des ersten oder zweiten Clusters eine Restkapazität an Ressourcen zum Starten von Containerinstanzen durch die Orchestrierungseinheit des eigenen Clusters vorgehalten, die nicht zum Starten einer Containerinstanz aus dem anderen Cluster freigegeben ist.

Dies ermöglicht es kritische, geräteabhängige Container-instanzen sofort auf einem Knoten des eigenen Clusterns zu starten und nicht erst auf eine Bereitstellung von Ressourcen im einem der zweiten Cluster warten zu müssen.

In einer vorteilhaften Ausführungsform wird bei einer Ausführung der Containerinstanz durch den zweiten Knoten, die erste Orchestrierungseinheit durch die zweite Orchestrierungseinheit benachrichtigt, wenn der zweite Auslastungszustand über einen vorgegebenen Maximalwert steigt, und die Ausführung der Containerinstanz wird auf dem zweiten Knoten beendet.

Die Containerinstanz ist eine Containerinstanz, die im dem ersten Cluster angefragt wurde, für die ein Zielknoten im zweiten Cluster ausgewählt und durch die zweite Orchestrierungseinheit auf einem der zweiten Knoten gestartet wurde. Der Auslastungszustand innerhalb eines zweiten Clusters kann über einen Maximalwert steigen, indem beispielsweise einzelne Containerinstanzen durch höheres Anfrageaufkommen stärker beansprucht werden und diese selbst mehr Ressourcen, insbesondere Rechenkapazität und/oder Speicherplatz auf einem Knoten benötigen oder durch einen Scheduler mit Hilfe einer Autoscaling Richtlinie weitere Containerinstanzen automatisch nachgestartet werden. Somit kann die Ressourcenteilung auch während der Ausführung der Containerinstanz geändert und Ressourcen auf dem zweiten Cluster freigegeben werden.

In einer vorteilhaften Ausführungsform wird die Lastinformation über eine Orchestrierungsschnittstelle zwischen der ersten Orchestrierungseinheit und der zweiten Orchestrierungseinheit ausgetauscht.

Dies ermöglicht eine direkte Kommunikation zwischen der ersten und zweiten Orchestrierungseinheit. Bei einer Orchestrierung mittels der Orchestrierungssoftware "Kubernetes" kann die Orchestrierungsschnittstelle beispielsweise über die Schnittstelle eines API-Servers ausgebildet sein, welcher auch Orchestrierungsinformationen und Anfragen lokaler Benutzer annimmt.

In einer vorteilhaften Ausführungsform wird lediglich nach einer erfolgreichen gegenseitigen Authentisierung der ersten Orchestrierungseinheit und der zweiten Orchestrierungseinheit Lastinformation über die Orchestrierungsschnittstelle ausgetauscht.

Dadurch ist sichergestellt, dass lediglich vertrauenswürdige zweite Orchestrierungseinheiten zur Ressourcenteilung herangezogen werden.

In einer vorteilhaften Ausführungsform wird die Lastinformation in festgelegten zeitlichen Abständen oder basierend auf ein Ressourcenbelegungsereignis zwischen der ersten und der zweiten Orchestrierungseinheit ausgetauscht.

Dies ermöglicht eine kontinuierliche bzw. effiziente Aktualisierung des zweiten Auslastungszustands in der ersten Orchestrierungseinheit.

In einer vorteilhaften Ausführungsform erhält die erste Orchestrierungseinheit unterschiedliche Berechtigungen bezüglich der Konfiguration von Containerinstanzen oder der Ressourcenbelegung auf dem zweiten Knoten abhängig von der zweite Orchestrierungseinheit.

Somit können von unterschiedlichen zweiten Clustern bzw. durch deren zweite Orchestrierungseinheiten unterschiedliche Bedingungen für die Ressourcenbelegung durch die erste Orchestrierungseinheit festgelegt werden. Eine solche Berechtigung kann beispielsweise durch eine an die Authentisierung anschließende Autorisierung der ersten Orchestrierungseinheit durch die zweite Orchestrierungseinheit erteilt werden.

In einer vorteilhaften Ausführungsform wird die Lastinformation von der zweiten Orchestrierungseinheit an eine zentrale Auslastungseinheit übermittelt und die Lastinformation von der ersten Orchestrierungseinheit bei der zentralen Auslastungseinheit abgefragt.

Dies reduziert den Kommunikationsaufwand erheblich, da die erste Orchestrierungseinheit die Lastinformation nicht bei jeder zweiten Orchestrierungseinheit direkt abfragen muss, sondern dies durch eine einzige Abfrage bei der zentralen Auslastungseinheit erreicht. Das gleiche gilt für die Kommunikation von der zweiten Orchestrierungseinheit, die ihre Lastinformation lediglich an die zentrale Auslastungseinheit übermitteln und nicht auf jede Anfrage von unterschiedlichen ersten Orchestrierungseinheiten antworten muss.

In einer vorteilhaften Ausführungsform ist die erste Orchestrierungseinheit als Abonnent und die mindestens eine zweite Orchestrierungseinheit als Veröffentlicher bei einem Publish-Subscribe-Dienst registriert und die erste Orchestrierungseinheit empfängt die Lastinformation der zweiten Knoten automatisch durch den Publish-Subscribe-Dienst.

Der Publish-Subscribe-Dienst kann dabei zentral oder dezentral verwaltet sein. Somit wird eine Kommunikation automatisch ausgeführt und die Kommunikationsmodalitäten können beispielsweise durch eine auf der ersten und der zweiten Orchestrierungseinheit hinterlegten Kommunikationsrichtlinie eingestellt werden.

In einer vorteilhaften Ausführungsform übermittelt die erste Orchestrierungseinheit die Anfrage zum Starten der Containerinstanz an die Orchestrierungseinheit des ausgewählten Zielknotens.

Ein zweiter Aspekt der Erfindung betrifft eine Anordnung zur Ressourcenteilung in einer orchestrierten Umgebung umfassend einen ersten Cluster und mindestens einen zweiten Cluster, bei dem jeder Cluster mindestens einen Knoten zum Ausführen mindestens einer Containerinstanz und eine Orchestrierungseinheit zum automatischen Verwalten der Containerinstanzen auf dem mindestens einen Knoten des Clusters aufweist, die derart ausgebildet ist
- eine Anfrage zum Starten der Containerinstanz umfassend eine Bereitstellungsrichtlinie in einer ersten Orchestrierungseinheit des ersten Clusters zu empfangen,
- einen ersten Auslastungszustand der ersten Knoten des ersten Clusters zur Bereitstellung der Containerinstanz durch die erste Orchestrierungseinheit des ersten Clusters zu ermitteln,
- einen zweiten Auslastungszustand der zweiten Knoten des mindestens einen zweiten Clusters durch einen Austausch von Lastinformation zwischen der ersten Orchestrierungseinheit und einer zweiten Orchestrierungseinheit des mindestes einen zweiten Clusters zu ermitteln,
- einen Zielknoten aus einem der ersten und zweiten Knoten abhängig von der Bereitstellungsrichtlinie und abhängig von dem ersten Auslastungszustand und dem zweiten Auslastungszustand durch die erste Orchestrierungseinheit auszuwählen, und
- die Containerinstanz durch die zweite Orchestrierungseinheit auf dem Zielknoten zu starten, wenn der ausgewählte Zielknoten ein zweiter Knoten ist.

Dadurch können Ressourcen innerhalb der Anordnung und somit der Orchestrierungsarchitektur über mehrere Orchestrierungseinheiten hinweg geteilt werden. Wird auf einem ersten Knoten beispielsweise eine Wartung ausgeführt, können temporär Ressourcen auf zweiten Knoten eines anderen, zweiten Clusters ausgelagert werden.

Die Anordnung ist dabei derart konfiguriert, dass alle im Verfahren beschriebenen Merkmale von der Anordnung ausgeführt werden können.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "empfangen", "ermitteln", "auswählen", "starten" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse. Die Anordnung und darin insbesondere die physikalische als auch die virtuelle Realisierung von Knoten, Orchestrierungseinheiten und dergleichen kann bzw. können einen oder mehrere Prozessoren umfassen.

Ein Computerprogrammprodukt, wie z. B. ein Computerprogrammmittel, kann beispielsweise als Speichermedium, wie z. B. Speicherkarte, USB-Stick, CD-ROM, DVD oder auch in Form einer herunterladbaren Datei von einem Server in einem Netzwerk bereitgestellt oder geliefert werden. Dies kann z. B. in einem drahtlosen Kommunikationsnetzwerk durch die Übertragung einer entsprechenden Datei auf das Computerprogrammprodukt oder dem Computerprogrammmittel erfolgen.

Ausführungsbeispiele des erfindungsgemäßen Verfahrens und der erfindungsgemäßen Anordnung sind in den Zeichnungen beispielhaft dargestellt und werden anhand der nachfolgenden Beschreibung näher erläutert. Es zeigen:
- Fig. 1: ein erstes Ausführungsbeispiel der erfindungsgemäßen Anordnung in schematischer Darstellung;
- Fig. 2: ein erstes Ausführungsbeispiel des erfindungsgemäßen Verfahrens in Form eines Ablaufdiagramms;
- Fig. 3: ein zweites Ausführungsbeispiel der erfindungsgemäßen Anordnung mit einer zentralen Auslastungseinheit in schematischer Darstellung; und
- Fig. 4: ein zweites Ausführungsbeispiel des erfindungsgemäßen Verfahrens mit einer zentralen Auslastungseinheit in Form eines Ablaufdiagramms.

Einander entsprechende Teile sind in allen Figuren mit den gleichen Bezugszeichen versehen.

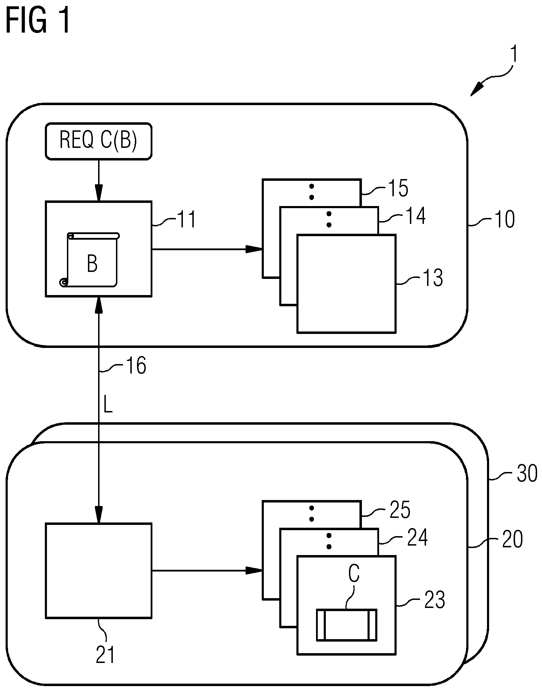

Fig. 1 zeigt eine orchestrierte Umgebung mit einem ersten Cluster 10, einem zweiten Cluster 20. Die orchestrierte Umgebung kann weitere zweite Cluster umfassen, siehe Cluster 30. Der Aufbau des ersten Clusters 10 und aller zweiten Cluster 20, 30 sowie die Verfahrensschritte zwischen dem ersten Cluster 10 und allen zweiten Clustern 20,30 sind ähnlich, sodass in der weiteren Beschreibung lediglich der Aufbau und die Verfahrensschritte zwischen dem ersten und dem zweiten Cluster 20 beschreiben wird.

Der erste Cluster 10 und der zweite Cluster 20 umfassen mindestens einen Knoten (13, 14, 15, 23, 24, 25) zum Ausführen mindestens einer Containerinstanz sowie eine Orchestrierungseinheit (11, 21) zum automatischen Verwalten der Container-instanzen auf dem mindestens einen Knoten (13, 14, 15, 23, 24, 25) des Clusters (10, 20). Ein Knoten kann ein Gerät, beispielsweise eine Steuerungsgerät oder eine Maschine sein, die auch virtuell ausgebildet sein können und umfasst mindestens einen Prozessor.

Die orchestrierte Umgebung kann beispielsweise eine IoT-Umgebung sein, bei der unterschiedliche Orchestrierungseinheiten, hier die erste Orchestrierungseinheit 11 und die zweite Orchestrierungseinheit 21 eigenständige Produktionsprozesse steuern und somit repräsentieren und von den jeweiligen Produktionsverantwortlichen jeweils auf das Produkt eigenständig angepasst werden können. Geräteunspezifische Containerinstanzen können durch die Orchestrierungseinheiten in einer solchen Umgebung dann zum Beispiel auf die Ressourcen, d.h. zweite Knoten anderer, zweiter Cluster ausgelagert werden, Containerinstanzen höherer Priorität auf selbstgemanagten Knoten, d.h. erste Knoten im ersten Cluster und ggf. spezialisierter Hardware, z.B. einer Steuerungskomponente für einen Industrieroboter, ausgeführt werden.

Um Ressourcen, d.h. erste oder zweite Knoten 13, 14, 15, 23, 24, 25 bzw. deren Rechen- und Speichereinheiten für die Ausführung von Containerinstanzen über mehrere Orchestrierungseinheiten 11, 21 hinweg verwalten zu können und gleichzeitig die eigentlichen Kernaufgaben der jeweiligen auf dem Cluster betrieben Applikationen wahrgenehmen zu können ist eine Orchestrierungsschnittstelle 16 zwischen der ersten Orchestrierungseinheit 11 und der zweiten Orchestrierungseinheit 21 ausgebildet über die die erste Orchestrierungseinheit 11 und die zweiten Orchestrierungseinheit 21 Lastinformation L in Bezug auf die zweiten Knoten 23, 24, 25 im zweiten Cluster 20 austauschen. Dabei wird angenommen, dass sich die erste und zweite Orchestrierungseinheit 11, 21 gegenseitig vertrauen und jede Orchestrierungseinheit 11, 21 seinen verwalteten Knoten vertraut. Die Anordnung kann ein Cloud-basiertes System sein, bei der die ersten und zweiten Knoten zumindest teilweise in einer Rechner-Cloud angeordnet sind, wie auch eine sogenannte "On-Premise" System sein, bei der die ersten und zweiten Knoten zumindest teilweise "vor Ort", beispielsweise in einer Industrieanlage angeordnet sind. Letzteres wird auch als Edge-Cloud bezeichnet.

Eine Zuordnung von einzelnen Containerinstanzen zu einem bestimmten Knoten oder Knotentyp ist durch eine Bereitstellungsrichtlinie B vorgegeben, die bei einer Anfrage zum Starten einer Containerinstanz an die erste Orchestrierungseinheit 11 übergeben wird. Containerinstanzen, die auf einem bestimmten Knoten oder einem bestimmten Knotentypen gestartet und ausgeführt werden müssen, sind beispielsweise Container-instanzen, die eine Anbindung an bestimmte Hardware, z.B. Speicherprogrammierbare Steuerungseinheiten, kurz PLC, benötigen. Durch die Bereitstellungsrichtline B ist somit festgelegt, ob die Containerinstanz auf einem beliebigen ersten oder zweiten Knoten 13, 14, 15, 23, 24, 25 innerhalb der Anordnung, d.h. des Cluster-Verbunds ausgeführt werden darf, diese auf einen Gerätetyp bzw. ein Gerät mit bestimmten Eigenschaften, zum Beispiel Verbindung mit einem bestimmten Teil des Produktionsnetzwerkes, beschränkt ist und ob ein definiertes Endgerät für die Containerinstanz vorgesehen ist. In der Bereitstellungsrichtlinie B ist vorgegeben, ob die Containerinstanz C lediglich auf einem der ersten Knoten 13, 14, 15 oder auch auf einem der zweiten Knoten 23, 24, 25 gestartet werden darf.

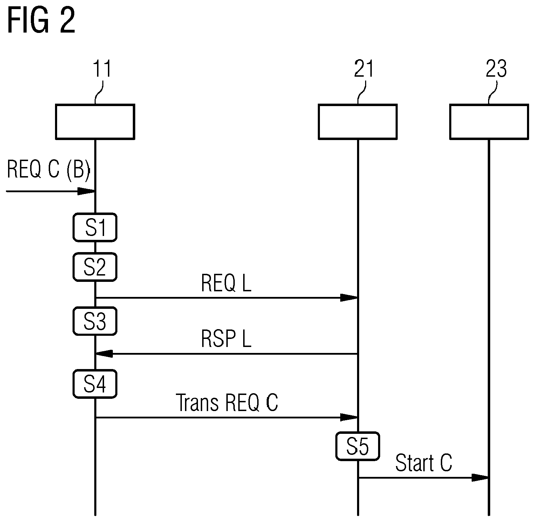

Anhand von Fig. 2 werden die Verfahrensschritte in der in Fig. 1 dargestellten orchestrierten Umgebung näher beschrieben.

In einem ersten Verfahrensschritt S1 empfängt der die erste Orchestrierungseinheit 11 des ersten Clusters 10 eine Anfrage REQ zum Starten einer Containerinstanz C. Die Anfrage muss nicht zwingend von außen, beispielsweise über eine Deployment-Information durch den Benutzer empfangen werden. Es ist auch möglich, dass innerhalb des ersten Clusters eine Anfrage zum Starten einer Instanz erzeugt wird, beispielsweise wenn eine Überlast-Situation erkennt und Autoscaling-Mechanismen im Cluster eine neue Containerinstanz initiieren und somit anfragen.

Anschließend im Verfahrensschritt S2 ermittelt die erste Orchestrierungseinheit 11 des ersten Clusters 10 einen ersten Auslastungszustand der ersten Knoten 13, 14, 15 des ersten Clusters 10. Des Weiteren, siehe S3, ermittelt die erste Orchestrierungseinheit 11 einen zweiten Auslastungszustand der zweiten Knoten 23, 24, 25 des zweiten Clusters durch einen Austausch von Lastinformation L zwischen der ersten Orchestrierungseinheit 11 und einer zweiten Orchestrierungseinheit 21 des mindestes einen zweiten Clusters 20. Dazu wird beispielsweise eine Anforderungsnachricht REQ L von der ersten Orchestrierungseinheit 11 über die Orchestrierungsschnittstelle 16, siehe Fig. 1, an die zweite Orchestrierungseinheit 21 übermittelt. Diese sendet die angefragte Lastinformation L mit einer Antwortnachricht RSP L an die erste Orchestrierungseinheit 11 zurück. Sind mehrere zweite Cluster vorhanden wird für jeden zweiten Cluster der zweite Auslastungszustand ermittelt. Im Verfahrensschritt S4 wählt die erste Orchestrierungseinheit 11 einen Zielknoten aus einem der ersten und zweiten Knoten 13, 14, 15, 23, 24, 25 abhängig von den Vorgaben durch die Bereitstellungrichtlinie, abhängig von dem ersten Auslastungszustand und abhängig von dem zweiten Auslastungszustand aus.

Die Containerinstanz C wird dann auf dem Zielknoten gestartet. Wurde als Zielknoten ein zweiter Zielknoten 23, ausgewählt weist die erste Orchestrierungseinheit 11 die zweite Orchestrierungseinheit 21 an, die Containerinstanz C auszuführen. Daraufhin startet die zweite Containerinstanz 21, siehe S5.

Die Zuweisung der Containerinstanz entsprechend der Berechtigungsrichtlinie B zum Zielknoten erfolgt beispielsweise über entsprechende Labels, die der Containerinstanz bzw. einem zugehörigen Containerimage mitgegeben werden.

Die erste Orchestrierungseinheit 11 erhält unterschiedliche Berechtigungen bezüglich der Konfiguration von Container-instanzen oder der Ressourcenbelegung auf dem zweiten Knoten 23 abhängig von der zweite Orchestrierungseinheit 21.

Die Reihenfolge der Ausführung der Verfahrensschritte S2, S3, S4 kann dabei unterschiedlich sein. Beispielsweise überprüft die erste Orchestrierungseinheit 11 die Bereitstellungsrichtlinie B, sobald diese an die erste Orchestrierungseinheit 11 übergeben wurde. Die erste Orchestrierungseinheit 11 überprüft, ob auf seinem eigenen Knoten, also den ersten Knoten 13, 14, 15 genügend Ressourcen zur Verfügung stehen und wählt den entsprechenden ersten Knoten aus. Ist die Ausführung der Containerinstanz C durch ihre Bereitstellungsrichtlinie B nicht auf einem bestimmten Knoten beschränkt, wird Containerinstanz C abhängig vom ersten und zweiten Auslastungszustand entweder auf einem der ersten Knoten 13, 14, 15, oder auf einem der zweiten Knoten 23, 24, 25 gestartet.

Innerhalb des ersten Clusters 10 kann optional festgelegt werden, dass für gerätespezifische Containerinstanzen immer eine Restkapazität von Ressourcen, insbesondere von Prozessorleistung und Speicherkapazität bereitgehalten werden muss, bzw. diese gegenüber nicht-gerätespezifischen Container-Instanzen bevorzugt werden sollen. Eine solche Restkapazität kann in gleicher Weise die zweite Orchestrierungseinheit 21 reservieren und in die Lastinformation L an die erste Orchestrierungseinheit 11 einbeziehen.

Ist die Ausführung der Containerinstanz C durch die Berechtigungsrichtlinie B nicht auf einen ersten Knoten 13, 14, 15 beschränkt wird diese abhängig vom ermittelten Auslastungszustand der einzelnen ersten und zweiten Knoten, auf einem der ersten Knoten 13, 14, 15 oder auf einem der zweiten Knoten gestartet. Der Auslastungszustand der Knoten 13, 14, 15, 23, 24, 25 kann aus Lastinformation, die durch einen Scheduler innerhalb der Orchestrierungseinheit 11, 21 periodisch bestimmt wird, ermittelt werden.

In der Bereitstellungsrichtlinie B kann festgelegt werden, dass bei Ressourcenknappheit im eigenen Cluster, also im ersten Cluster 10, eine Containerinstanz eines anderen Clusters, beispielsweise einer Containerinstanz, die im zweiten Cluster 20 ursprünglich angefragt wurde, nicht mehr auf einem ersten Knoten im ersten Cluster 10 zur Ausführung kommt oder deren Ausführung im ersten Cluster 10 gestoppt wird. Die Orchestrierungseinheit, welche den Knoten verwaltet, hier die zweite Orchestrierungseinheit 21 wird darüber von der Orchestrierungseinheit, welche den Knoten benötigt, hier die erste Orchestrierungseinheit 11, entsprechend informiert.

Entsprechend wird bei der Ausführung der Containerinstanz C, durch den zweiten Knoten 23, die erste Orchestrierungseinheit 11 durch die zweite Orchestrierungseinheit 21 benachrichtigt, wenn der zweite Auslastungszustand über einen vorgegebenen Maximalwert steigt. Die Ausführung der Containerinstanz C auf dem zweiten Knoten 23 wird beendet wird. Um eine unterbrechungsfreie Ausführung der Containerinstanz C und somit der dadurch bereitgestellten Applikation sicherzustellen, stellt die erste Orchestrierungseinheit 11 nach Erhalt dieser Lastinformation eine neue Containerinstanz C auf einem anderen Knoten bereit und teilt dies der zweiten Orchestrierungseinheit 21 mit. Erst auf diese Mitteilung beendet die zweiten Orchestrierungseinheit 21 die Ausführung der Containerinstanz C auf dem zweiten Knoten 23. Wird die Containerinstanz C nicht rechtzeitig von der ersten Orchestrierungseinheit 11 verlagert, stoppt die zweite Orchestrierungseinheit 21 unabhängig davon.

Um eine Abfrage von Lastinformation L durch unerlaubte oder manipulierte Orchestrierungseinheiten 11, 21 zu verhindern oder zumindest zu erschweren, wird lediglich nach einer erfolgreichen gegenseitigen Authentisierung der ersten Orchestrierungseinheit 11 und der zweiten Orchestrierungseinheit 21 die Lastinformation über die Orchestrierungsschnittstelle 16 ausgetauscht. Die erste und zweite Orchestrierungseinheit 11, 21 authentifizieren sich beispielsweise mit Hilfe eines Client-Zertifikates oder eines Web Token in JavaScript Objekt Notation, auch JSON Web Token genannt. Dadurch kann ein Zugriff auf ein Kommunikationsnetzwerk des zweiten bzw. des ersten Clusters 20, 10 auf bekannte Orchestrierungseinheiten 11 bzw. 21 eingeschränkt werden.

Die Lastinformation L wird in festgelegten zeitlichen Abständen oder basierend auf ein Ressourcenbelegungsereignis zwischen der ersten und der zweiten Orchestrierungseinheit 11, 21 ausgetauscht. In einer Ausführungsform ist die erste Orchestrierungseinheit 11 als Abonnent und die mindestens eine zweite Orchestrierungseinheit 21 als Veröffentlicher bei einem Publish-Subscribe-Dienst registriert und die erste Orchestrierungseinheit 11 empfängt die Lastinformation L der zweiten Knoten 23, 24, 25 automatisch durch den Publish-Subscribe-Dienst.

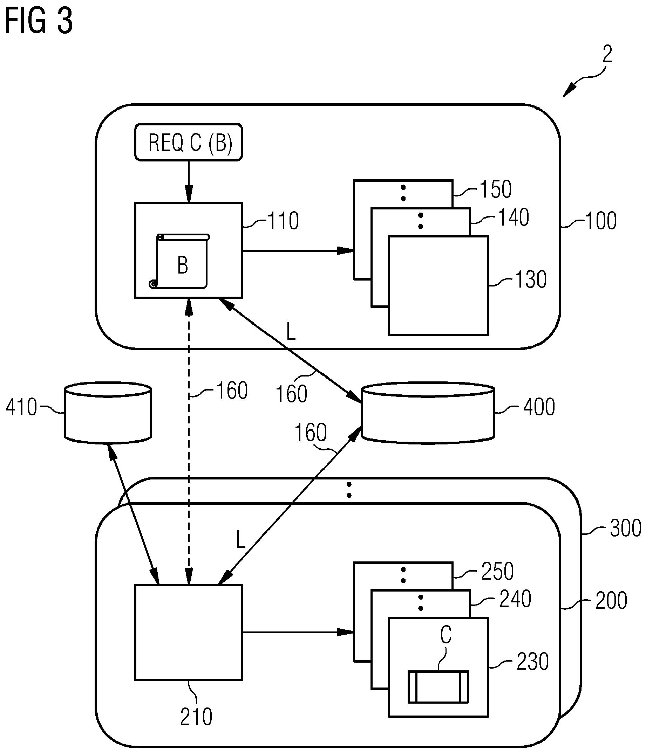

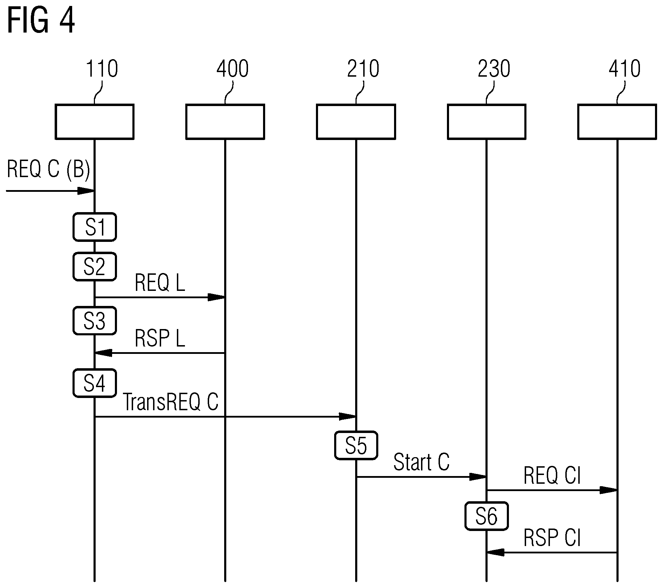

Alternativ zu einer als Peer-to-Peer Kommunikation zwischen der ersten und zweiten Orchestrierungseinheit 11, 21 ausgebildeten Orchestrierungsschnittstelle 16 kann die Lastinformation L über einen zentralen Ressource Management Einheit zwischen der ersten und zweiten Orchestrierungseinheit 11, 21 ausgetauscht werden. Eine entsprechende Anordnung ist in Fig. 3, die Verfahrensschritte in Fig. 4 dargestellt.

Die Anordnung 2 umfasst entsprechend der Anordnung 1 aus Fig. 1 ein erstes Cluster 100 mit einer ersten Orchestrierungseinheit 110 und ersten Knoten 130, 140, 150 sowie ein zweites Cluster 200 mit eine zweiten Orchestrierungseinheit 210 und zweiten Knoten 230, 240, 250. Zusätzlich umfasst die Anordnung 2 eine zentrale Auslastungseinheit 400, die Lastinformation L von der zweiten Orchestrierungseinheit 210 über eine Orchestrierungsschnittstelle 160 empfängt und die Lastinformation L über eine Orchestrierungsschnittstelle 160 an die erste Orchestrierungseinheit 110 bereitstellt. Um die Containerinstanz C auf einem Zielknoten, hier beispielsweise dem zweiten Knoten 230 starten zu können, wird ein entsprechendes Containerimage CI von einer Bereitstellungseinheit 410, auch als Image Registry bezeichnet, der zweiten Orchestrierungseinheit 210 bereitgestellt. Die Orchestrierungsschnittstelle 160 ist bei einer Bereitstellung von Lastinformation L durch die Auslastungseinheit 400 in mehrere Teilabschnitte aufgeteilt. Neben den Teilabschnitten zwischen erster Orchestrierungseinheit 110 und der Auslastungseinheit 400 sowie zwischen der zweiten Orchestrierungseinheit 210 und der Auslastungseinheit 400 ist ein weiterer Teilabschnitt direkt zwischen der ersten und zweiten Orchestrierungseinheit 110, 210 vorhanden um beispielsweise Information zur Steuerung und Verwaltung der auf den zweiten Knoten 230, 240, 250 ausgeführten Container C auszutauschen.

Die Verfahrensschritte zum Empfangen der Anfrage S1 und des Ermittelns des ersten Auslastungszustands S2, siehe Fig. 4, entsprechend bleichen gegenüber dem Szenario mit einer direkten, Peer-to-Peer Orchestrierungsschnittstelle 16 unverändert. Zur Ermittlung eines zweiten Auslastungszustands, siehe S3, wird nun die Lastinformation L von der ersten Orchestrierungseinheit 110 bei der zentralen Auslastungseinheit 400 abgefragt. Des Weiteren ist im Verfahrensschritt S6 die Bereitstellung des Containerimages durch die Bereitstellungseinheit 410 dargestellt.

Für die Bereitstellung von Ressourcen bzw. Lastinformation L werden zwei verschiedene Varianten vorgeschlagen: Eine dezentrale Bereitstellungsvariante, siehe Fig. 1 und Fig. 2, bei der die zweiten Orchestrierungseinheit 11 den anderen beteiligten ersten Orchestrierungseinheiten 21 im Peer-to-Peer-Verfahren, oder z.B. mittels eines geeigneten, dezentralen Publish-Subscribe-Dienstes wie beispielsweise einem Datenverteildienst Data Distribution Service (DDS) mitteilen, über welche Ressourcen er bei einem Bereitstellungswunsch für eine angefragte Containerinstanz C verfügt. Die verfügbaren Ressourcen bzw. die Lastinformation L, können hierbei von den beteiligten Orchestrierungseinheiten 11, 21 entweder periodisch abgefragt werden oder periodisch bzw. aufgrund eines Ereignisses, wie beispielsweise dem gewünschten Stopp einer Ausführung einer Containerinstanz C, Start einer Containerinstanz C, Hoch- und Runterskalierung von Containerinstanzen von der ressourcenbereitstellenden zweiten Orchestrierungseinheit aktiv kommuniziert werden. Das Verhalten kann in einer auf den zweiten und/oder ersten Orchestrierungseinheiten 11, 21 hinterlegten Kommunikationsrichtlinie eingestellt werden.

Zudem ist es möglich, dass bei diesem Verfahren eine zweite Orchestrierungseinheit verschiedenen ersten Orchestrierungseinheiten unterschiedliche Berechtigungen bzgl. der Konfiguration einzelner Containerinstanzen C erlaubt und unterschiedliche Ressourcenbelegungen zulässt. Die ressourcenbereitstellende zweite Orchestrierungseinheit kann z.B. keine Ressourcen für privilegierte Containerinstanzen zuweisen, oder abgestuft nach Prozessor- und Hauptspeicheranforderungen unterschiedlicher Containerinstanzen oder abhängig von der Signatur eines Containers, z.B. zur Ermittlung der Vertrauenswürdigkeit über die Herkunft, unterschiedliche Ressourcen für die erste Orchestrierungseinheit 11 bereitstellen. Als weiteres Kriterium kann zudem die erste Orchestrierungseinheit 11 selbst mit einbezogen werden, sodass unterschiedlichen ersten Orchestrierungseinheiten unterschiedliche Ressourcen dynamisch bereitgestellt werden können.

In einer weiteren Variante ist es möglich, dass für die Bereitstellung von Ressourcen anderer, zweiter Cluster 200 die aktuell verfügbaren Ressourcen bzw. Lastinformation L in eine zentrales Bereitstellungseinheit 400 eingetragen werden. Die Bereitstellungseinheit 400 kann die zweiten Orchestrierungseinheiten 200 eigenständig abfragen, oder mittels eines zentral verwalteten Publish-Subscribe-Dienstes, wie beispielsweise sogenannten Message Queuing Telemetry Transport MQTT, benachrichtigt werden. Die Abfragung bzw. Bereitstellung der Lastinformation L erfolgt beispielsweise periodisch und/oder immer dann, wenn sich die Ressourcenbelegung aufgrund des Starts oder Stopps von Containerinstanzen verändert. Es ist auch eine Kombination aus beiden Verfahren möglich.
Möchte eine erster Orchestrierungseinheit 110 Container-instanzen an ein zweites Cluster 200 auslagern, kann diese im Bedarfsfall die Ressourcenverfügbarkeit der einzelnen zweiten Cluster 200, 300 abfragen.

Bei beiden Varianten kann die anfragende erste Orchestrierungseinheit die Ziel- bzw. zweite Orchestrierungseinheit gewichten, und somit steuern, welche zweite Orchestrierungseinheit bevorzugte Ausführungsumgebungen für ausgelagerte Containerinstanzen sind. Kriterien können hierbei die verfügbaren Gesamtressourcen oder z.B. die Latenzzeiten der zweiten Orchestrierungseinheiten sein. Des Weiteren kann die Ressourcen bereitstellende zweite Orchestrierungseinheit auch Ortsinformationen über die zweiten Knoten oder Prozessor-Architektur, Qualitäts (QoS) Anforderungen wie z.B. ein echtzeitfähiges Linux, o.ä. bereitstellen, welche die anfragenden ersten Orchestrierungseinheiten auswerten. Es ist ebenfalls möglich, dass einzelne Cluster sich gegenseitig einzelne genutzte Ressourcen verrechnen und diese in die Gewichtung mit einbezogen werden.

Sobald ein Scheduler der ersten Orchestrierungseinheit 110 den Zielcluster ermittelt hat, übergibt er den Bereitstellungs-Wunsch, siehe TransREQ C für die Containerinstanz C an die zweite Orchestrierungseinheit 210, siehe Fig. 4. Die abgebende erste Orchestrierungseinheit 110 ermittelt hierbei ebenfalls die IP-Adresse und teilt der aufnehmenden zweiten Orchestrierungseinheit 210 mit, wie ein Overlay-Netzwerk aufzubauen ist. Hierbei besteht die Möglichkeit, dass über die erste und die zweiten Orchestrierungseinheiten hinweg das Netzwerk etabliert wird oder der Zielknoten spezifiziert wird, zu welchem der von der zweiten Orchestrierungseinheit 210 ausgewählte Laufzeitknoten, hier Zielknoten 230, der ausgelagerten Containerinstanz die Netzwerkverbindung aufbauen soll. Wie die Netzwerkverbindung aufgebaut wird, wird hierbei durch einen verwendeten (Overlay-)Netzwerktreiber ermittelt. Beispielweise ist es möglich, dass diese bei Bedarf IPSEC Tunnel aufbauen oder eine durch Software designte Netzwerk (SDN)-Verbindung aufbauen. Ob weitere Containerinstanzen C nachgestartet werden sollen oder nicht, verbleibt die Entscheidung der abgebenden ersten Orchestrierungseinheit 110. Die aufnehmende zweite Orchestrierungseinheit 210 übernimmt jedoch ein Laufzeitmonitoring und meldet einen Status der Containerinstanz C an die abgebende erste Orchestrierungseinheit 110 zurück.

Die Exponierung, d.h. die zur Verfügungstellung des in der Containerinstanz bereitgestellten Dienstes bzw. Applikation für einen anderen Dienst oder einen Benutzer, von Container-instanzen erfolgt mit Hilfe von Loadbalancern, die von den Orchestrierungseinheiten verwaltet werden. Hierbei besteht die Möglichkeit, dass die abgebende erste Orchestrierungseinheit 11, 110 selbst einen Loadbalancer orchestriert und die ausgelagerte Containerinstanz C einbindet oder auch bei der aufnehmenden zweiten Orchestrierungseinheit 21, 210 Loadbalancer-Funktionalitäten anfordert. Hierzu muss diese dann wie bei der Auslagerung der Containerinstanz mit Hilfe des Overlay-Netzwerktreibers in das Applikationsnetzwerk integriert werden.

Werden verteilte Datenspeicher bzw. Dateiverzeichnisse, auch Volumes genannt, für die Containerinstanz C benötigt, sind diese ebenfalls vom abgebenden ersten Cluster 10, 100 über das Netzwerk bereitzustellen. Beispiele wären hierfür sind exponierte globale Dateisysteme, NFS (Network File Service)-Shares, WebDAV (Web-based Distributed Authoring and Versioning), iSCSI (internet Small Computer System Interface) und dergleichen. Prinzipiell unterscheidet sich die Technologie für die Exponierung für ein Volume nicht von einem einzelnen Cluster. Jedoch sind die Dienste über das Netzwerk gegebenenfalls weiter exponiert. In unserem Fall müssen sie so exponiert bzw. zugreifbar sein, dass die Knoten des aufnehmenden zweiten Clusters auch auf diese zugreifen können.

Benötigt eine zweite Orchestrierungseinheit 21, 210 Platz für eigene Containerinstanzen, kann diese der abgebenden ersten Orchestrierungseinheit 11, 110 den eigenen Ressourcenbedarf mitteilen. Abhängig von definierten Schwellwerten, wie beispielsweise einem Maximalwert für Prozessor- und Speicherkapazität wird hierbei definiert, ob eine Containerinstanz sofort beendet werden soll oder erst der auslagernden ersten Orchestrierungseinheit die Gelegenheit gegeben werden soll, die Instanz an einem anderen Ort, z.B. auf eigenen Cluster-Knoten oder einem anderen Cluster, zu starten und innerhalb einer bestimmten Frist selbst zu beenden. In welchem Cluster 10, 20, 100, 200 eine Containerinstanz gestartet werden soll, ob auf dem lokalen ersten Cluster 10, 100 oder ausgelagert auf einem zweiten Cluster 20, 200, kann die erste Orchestrierungseinheit 11, 110 abhängig von der Kritikalität der Containerinstanz C, die beispielsweise vom Ersteller in der Bereitstellungsrichtlinie B definiert wird, einer definierten Zielplattform und dem Auslastungsinformation der lokalen Ressourcen mit Hilfe einer Scheduling-Richtlinie entscheiden.

Um Container-Instanzen ausführen zu können, wird angenommen, dass sämtliche auszulagernde Containerimages CI in mindestens einer Containerimage-Bereitstellungseinheit 410 abgelegt werden, die von allen relevanten Knoten aus erreicht werden können. In einer alternativen Variante meldet die aufnehmende zweite Orchestrierungseinheit 21, 210 der abgebenden ersten Orchestrierungseinheit 11, 110 zurück, dass er das gewünschte Containerimage nicht beziehen kann und bekommt es im Anschluss von der abgebenden ersten Orchestrierungseinheit 11, 110 übertragen.

In einer erweiterten Variante kann die aufnehmende zweite Orchestrierungseinheit 21, 210 Containerinstanzen einer ersten Orchestrierungseinheit 11, 110 stoppen, wenn diese Aktivitäten ausführt, die nicht einer in der zweiten Orchestrierungseinheit 21, 210 hinterlegten Knoten-Richtlinie entsprechen. Abweichungen zur Laufzeit können beispielsweise mit "Anomaly Detection" Mechanismen erkannt werden. Die aufnehmende zweite Orchestrierungseinheit kann die Annahme von Containerinstanzen einer ersten Orchestrierungseinheit verweigern, wenn diese seinen eigenen Bereitstellungs-Richtlinien - analog zu Pod Security Policies (siehe https://kubernetes.io/docs/concepts/policy/pod-security-policy/) widersprechen. Eine solche Pod Security Policy kann für abgebende zweite Cluster 20, 200 andersartig, z.B. verschärft, gestaltet sein als für Anfragen zum Starten einer Containerinstanz eigener Orchestrierungsbenutzer.

Es ist denkbar, dass in einer Richtlinie definiert wird, dass eine erste Orchestrierungseinheit 11, 21 nur beim Ausfall eines ersten Knotens temporär auf die zweiten Knoten des zweiten Clusters 20, 200 auslagert und vorzugsweise die eigenen ersten Knoten 13, 14, 15, 130, 140, 150 verwendet.

Durch das beschriebene Verfahren können die Ressourcen bzw. Knoten über mehrere Cluster hinweg besser genutzt werden und somit die Knoten der Anordnung gleichmäßiger ausgenutzt werden. Die erfindungsgemäße Anordnung kann mit somit gegenüber einer herkömmlichen orchestrierten Umgebung insgesamt höher ausgelastet werden und somit mehr Containerinstanzen ausführen. Eine Orchestrierungseinheit kann komplett ohne eigene Knoten betrieben werden oder direkt lediglich systemkritische Ressourcen bzw. Knoten orchestrieren. Mit der Lösung wird eine Cloud-provider unabhängige Container-als-ein-Dienst (Container as a Service)-Lösung geschaffen.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Ressourcenteilung in einer orchestrierten Umgebung mit einem ersten Cluster (10) und mindestens einem zweiten Cluster (20), bei dem jeder Cluster (10, 20) eine Orchestrierungseinheit (11, 21) zum automatischen Verwalten einer Containerinstanz auf mindestens einem Knoten (13, 14, 15, 23, 24, 25) der Cluster (10, 20) aufweist, umfassend
- Empfangen (S1) einer Anfrage zum Starten der Containerinstanz (C) umfassend eine Bereitstellungsrichtlinie (B) in einer ersten Orchestrierungseinheit (11) des ersten Clusters (10),
- Ermitteln (S2) eines ersten Auslastungszustands von ersten Knoten (13, 14, 15) des ersten Clusters (10) zur Bereitstellung der Containerinstanz (C) durch die erste Orchestrierungseinheit (21) des ersten Clusters (10),
- Ermitteln (S3) eines zweiten Auslastungszustands von zweiten Knoten (23, 24, 25) des mindestens einen zweiten Clusters (20) durch einen Austausch von Lastinformation (L) zwischen der ersten Orchestrierungseinheit (11) und einer zweiten Orchestrierungseinheit (21) des mindestes einen zweiten Clusters, und
- Auswählen (S4) eines Zielknotens aus einem der ersten und zweiten Knoten (13, 14, 15, 23, 24, 25) abhängig von der Bereitstellungsrichtlinie (B) und abhängig von dem ersten Auslastungszustand und dem zweiten Auslastungszustand durch die erste Orchestrierungseinheit (11), und
- Starten (S5) der Containerinstanz (C) durch die zweite Orchestrierungseinheit (21) auf dem Zielknoten (23), wenn der ausgewählte Zielknoten (23) ein zweiter Knoten (23, 24, 25) ist.

2. Verfahren nach Anspruch 1, wobei in der Bereitstellungsrichtlinie ein bestimmter Knoten oder ein Knotentyp und/oder Eigenschaften des Knotens vorgegeben sind, auf dem die Containerinstanz (C) gestartet werden darf.

3. Verfahren nach einem der vorangehenden Ansprüche, wobei in der Bereitstellungsrichtlinie (B) vorgegeben ist, ob die Containerinstanz (C) lediglich auf einem der ersten Knoten (13, 14, 15) oder auch auf einem der zweiten Knoten (23, 24, 25) gestartet werden darf.

4. Verfahren nach einem der vorangehenden Ansprüche, wobei eine Containerinstanz (C), deren Ausführung nicht auf einem bestimmten Knoten beschränkt ist, abhängig vom ersten und zweiten Auslastungszustand entweder auf einem der ersten (13, 14, 15) oder auf einem der zweiten Knoten (23, 24, 25) gestartet wird.

5. Verfahren nach einem der vorangehenden Ansprüche, wobei innerhalb des ersten (10) oder zweiten Clusters (20) eine Restkapazität an Ressourcen zum Starten von Containerinstanzen durch die Orchestrierungseinheit (11, 21) des eigenen Clusters (10, 20) vorgehalten wird, die nicht zum Starten einer Containerinstanz (C) aus dem anderen Cluster freigegeben ist.

6. Verfahren nach einem der vorangehenden Ansprüche, wobei bei einer Ausführung der Containerinstanz durch den zweiten Knoten, die erste Orchestrierungseinheit (11) durch die zweite Orchestrierungseinheit (21) benachrichtigt wird, wenn der zweite Auslastungszustand über einen vorgegebenen Maximalwert steigt, und die Ausführung der Containerinstanz (C) auf dem zweiten Knoten (23, 24, 25) beendet wird.

7. Verfahren nach einem der vorangehenden Ansprüche, wobei die
Lastinformation (L) über eine Orchestrierungsschnittstelle (16, 160) zwischen der ersten Orchestrierungseinheit (11, 110) und der zweiten Orchestrierungseinheit (21, 210) ausgetauscht wird.

8. Verfahren nach Anspruch 7, wobei lediglich nach einer erfolgreichen gegenseitigen Authentisierung der ersten Orchestrierungseinheit (11, 110) und der zweiten Orchestrierungseinheit (21, 210) Lastinformation über die Orchestrierungsschnittstelle (16, 160) ausgetauscht wird.

9. Verfahren nach einem der vorangehenden Ansprüche, wobei die Lastinformation in festgelegten zeitlichen Abständen oder basierend auf ein Ressourcenbelegungsereignis zwischen der ersten (11) und der zweiten Orchestrierungseinheit (21) ausgetauscht wird.

10. Verfahren nach einem der vorangehenden Ansprüche, wobei die erste Orchestrierungseinheit (11) unterschiedliche Berechtigungen bezüglich der Konfiguration von Containerinstanzen oder der Ressourcenbelegung auf dem zweiten Knoten (13, 14, 15) abhängig von der zweite Orchestrierungseinheit (21) erhält.

11. Verfahren nach einem der vorangehenden Ansprüche, wobei die Lastinformation von der zweiten Orchestrierungseinheit (210) an eine zentrale Auslastungseinheit (400) übermittelt und die Lastinformation (L) von der ersten Orchestrierungseinheit (110) bei der zentralen Auslastungseinheit (400) abgefragt wird.

12. Verfahren nach einem der vorangehenden Ansprüche, wobei die erste Orchestrierungseinheit (11, 110) als Abonnent und die mindestens eine zweite Orchestrierungseinheit (21, 210) als Veröffentlicher bei einem Publish-Subscribe-Dienst registriert ist und die erste Orchestrierungseinheit (11, 110) die Lastinformation (L) der zweiten Knoten (23, 24, 25, 230, 240, 250) automatisch durch den Publish-Subscribe-Dienst empfängt.

13. Verfahren nach einem der vorangehenden Ansprüche, wobei die erste Orchestrierungseinheit (11, 110) die Anfrage zum Starten der Containerinstanz (C) an die Orchestrierungseinheit (21, 210) des ausgewählten Zielknotens (23, 230) übermittelt.

14. Anordnung zur Ressourcenteilung in einer orchestrierten Umgebung umfassend einen ersten Cluster (10) und mindestens einen zweiten Cluster (20), bei dem jeder Cluster eine Orchestrierungseinheit (11, 21) zum automatischen Verwalten einer Containerinstanz auf mindestens einem Knoten (13, 14, 15, 23, 24, 25) der Cluster (10, 20) aufweist, die derart ausgebildet ist
- eine Anfrage zum Starten der Containerinstanz (C) umfassend eine Bereitstellungsrichtlinie (B) in einer ersten Orchestrierungseinheit (11) des ersten Clusters (10) zu empfangen,
- einen ersten Auslastungszustand von ersten Knoten (13, 14, 15) des ersten Clusters (10) zur Bereitstellung der Containerinstanz (C) durch die erste Orchestrierungseinheit (11) des ersten Clusters (10) zu ermitteln,
- einen zweiten Auslastungszustand von zweiten Knoten (23, 24, 25) des mindestens einen zweiten Clusters (20) durch einen Austausch von Lastinformation (L) zwischen der ersten Orchestrierungseinheit (11) und einer zweiten Orchestrierungseinheit (21) des mindestes einen zweiten Clusters (20) zu ermitteln,
- einen Zielknoten (23) aus einem der ersten (13, 14, 15) und zweiten Knoten (23, 24, 25) abhängig von der Bereitstellungsrichtlinie (B) und abhängig von dem ersten Auslastungszustand und dem zweiten Auslastungszustand durch die erste Orchestrierungseinheit (11) auszuwählen, und
- die Containerinstanz (C) durch die zweite Orchestrierungseinheit (21) auf dem Zielknoten (23) zu starten, wenn der ausgewählte Zielknoten (23) ein zweiter Knoten (23, 24, 25) ist.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 13 durchzuführen.
